# EUROPEAN PATENT APPLICATION

(11) **EP 2 763 383 A2**
(43) Date of publication of application: **06.08.2014**
(21) Application number: 14153845.4
(22) Date of filing: 04.02.2014
(51) Int. Cl.: H04M 1/2745

(54) **Method and apparatus for providing short-cut number in user device**

(30) Priority: 04.02.2013 KR 20130012146
(71) Applicant: Samsung Electronics Co., Ltd, Gyeonggi-do 443-742 (KR)
(72) Inventor: Nam, Sanghyuck, Gyeonggi-do 443-742 (KR)
(74) Representative: Jenkins, Richard Gavin

(57) **Abstract**

A method and an apparatus for using a short-cut number function in a user device enabling intuitive and rapid input of a phone number of another party for short-cut number-based communication when a short-cut number input mode is used in the user device including a touch screen are provided. The method includes executing a short-cut number input mode, setting a short-cut number according to a call frequency corresponding to contact information when the short-cut number input mode is executed, extracting contact party information corresponding to the set short-cut number, and displaying the contact party information corresponding to the short-cut number through a button of a touch key pad.

## Description

### TECHNICAL FIELD

The present disclosure relates to a method and an apparatus for operating a function in a user device to support a touch-based input. More particularly, the present disclosure relates to a method for enabling a short-cut number in a user device capable of intuitive and rapid input of contact information of another party for communication based on a short-cut number upon a communication function operation in a user device including a touch screen, and an apparatus thereof.

### BACKGROUND

Currently, various mobile terminals such as a mobile communication terminal, a Personal Digital Assistant (PDA), an electronic notebook, a smart phone, a tablet Personal Computer (PC) and the like have been released according to development of digital technology, and perform several functions including mobile communication and processing of personal information. The mobile devices have developed to a mobile convergence stage including a conventional communication function and other additional functions. Typically, the mobile device may have various functions such as a call function, including audio call and image call, a transmission and reception function of a message, such as Short Message Service (SMS)/Multimedia Message Service (MMS) and e-mail, a navigation function, a photographing function, a broadcasting playback function, a media (video and music) playback function, Internet, a messenger function, and a Social Networking Service (SNS) function.

A call function, among the various functions, may be one function which users frequently use in the user device. In this case, the user should input or select contact information (e.g. wired phone number, mobile communication phone number, and the like) when using the call function. Accordingly, in order to input corresponding contact information, the user uses one of a scheme of searching and inputting contact information or a scheme of directly inputting contact information memorized by the user. However, the foregoing schemes require a complicated procedure of searching contact information and have the inconvenience that the user has to memorize too much contact information.

Accordingly, the user device supports the setting of a short-cut number for contact information, and a function of automatically inputting corresponding contact information with the input of the short-cut number. That is, by improving an existing phone book function and assigning a phone number of a specific person to a short-cut number, the user device supports a short-cut number function capable of calling another party without inputting all the numbers of a phone number or without searching for the phone number of the specific person in the phone book, by inputting only a short-cut number to select a call key.

Accordingly, the user registers frequently used contact information in a short-cut number through a short-cut number function, and inputs corresponding contact information by simply inputting the short-cut number to execute a call function. For example, the user may easily place a call using a short-cut number preset to a number button on the keypad by pressing for a long period of time, the number button in a call mode. In this case, the user device may try to place a call with contact information of a corresponding short-cut number by detecting the pressing of the short-cut number.

However, the user must memorize contact information allocated to each short-cut number in a call function operation based on the existing short-cut number. When there is a large amount of contact information allocated to the short-cut number, it is difficult for the user to recognize all the contact information. That is, in a method of supporting a call function based on the short-cut number according to the related art, as the quantity of set short-cut numbers increases, information which the user must memorize also increases. Accordingly, it becomes increasingly difficult for the user to memorize all set short-cut numbers. Thus, the benefit of using the short-cut number may be lost. Recognizing that the short-cut number function is a function habitually used by users unaccustomed to using the user device or by users who have difficulty searching for contact information, the setting of short-cut numbers by such users may be so complicated, that it is difficult to use.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an apparatus for providing a short-cut number in a user device to support an intuitive short-cut number function in the user device.

Another aspect of the present disclosure is to provide a method and an apparatus for providing a short-cut number in a user device capable of supporting a short-cut number function for the convenience of the user in a short-cut number input mode, such as a message mode or a messenger mode, as well as a call mode.

Another aspect of the present disclosure is to provide a method and an apparatus for providing a short-cut number in a user device capable of displaying contact party information of a short-cut number matching with a corresponding number on a number button of a key pad in a short-cut number input mode.

Another aspect of the present disclosure is to provide a method and an apparatus for providing a short-cut number in a user device, where the user device may collect contact information frequently used by the user, automatically set a short-cut number based on a call frequency according to collected contact information, and display contact party information corresponding to set short-cut numbers through a corresponding button of a key pad.

Another aspect of the present disclosure is to provide a method and an apparatus for providing a short-cut number in a user device capable of improving the convenience to a user and usability of the user device by implementing an optimal environment to support a short-cut number function in the user device.

In accordance with an aspect of the present disclosure, a method of providing a short-cut number in a user device is provided. The method includes executing a short-cut number input mode, setting a short-cut number according to a call frequency corresponding to contact information when the short-cut number input mode is executed, extracting contact party information corresponding to the set short-cut number, and displaying the contact party information corresponding to the short-cut number through a button of a touch key pad.

Another aspect of the present disclosure provides a computer readable recording medium recording a program to execute the method by a processor.

In accordance with another aspect of the present disclosure, a user device is provided. The user device includes a display unit to display a reception information input window and a touch key pad in a short-cut number input mode, and to display contact party information of a short-cut number designated to each button of the touch key pad, a touch sensing unit to receive a touch event based on the touch key pad in the short-cut number input mode, and a controller to control to set a short-cut number according to the call frequency corresponding to contact information when the short-cut number input mode is executed, and to extract contact party information corresponding to the set short-cut number to display through a button of the touch key pad.

In accordance with another aspect of the present disclosure, a computer readable recording medium recording a program is provided to check a call frequency corresponding to contact information upon execution of a short-cut number input mode, to automatically set short-cut numbers according to a call frequency corresponding to contact information, to extract contact party information corresponding to the set short-cut numbers, and to process to display the contact party information corresponding to short-cut numbers through a button of a touch key pad.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram schematically illustrating a configuration of a user device according to an embodiment of the present disclosure;
FIGS. 2 and 3 are diagrams illustrating examples of a screen interface supported to operate a short-cut number function in a user device according to an embodiment of the present disclosure;
FIG. 4 is a flowchart illustrating a method for providing a short-cut number in a user device according to an embodiment of the present disclosure;
FIG. 5 is a flowchart illustrating a method for operating a short-cut number function in a user device according to an embodiment of the present disclosure; and
FIGS. 6, 7, and 8 are diagrams illustrating examples of an operation screen to operate the short-cut number function in a user device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An embodiment of the present disclosure relates to a method and apparatus for providing a short-cut number in a user device enabling intuitive and rapid input of contact information (e.g. wired phone number, mobile communication phone number, and the like) of another party for communication based on a short-cut number upon an operation of an input mode of a short-cut number in a user device equipped with a touch screen. In the embodiment of the present disclosure, the short-cut number input mode is used as a representative term of modes for all functions requiring contact information input of another party such as a call mode, a message mode, and a messenger mode (e.g. Social Networking Service (SNS) and the like).

According to an embodiment of the present disclosure, when a reception information input window is selected in the short-cut number input mode, contact party information (e.g. a contact party's name, a nickname, a contact party's image, phone number and the like) of a short-cut number matching with a corresponding number may be displayed on a number button of a touch-key pad supporting a touch-based input. In the embodiment of the present disclosure, the user device may collect contact information which the user frequently uses, and manage a call frequency according to the collected contact information. Further, the user device may automatically set contact party information of a short-cut number based on a call frequency corresponding to contact information, and may display the set contact party information corresponding to short-cut numbers through a number button of the touch key pad.

That is, according to the embodiment of the present disclosure, a short-cut number is automatically set by using the contact information which the user frequently uses, and each contact information is displayed through a number button of the touch key pad as contact party information according to user setting, and a corresponding short-cut number function may be provided.

Hereinafter, a configuration of the user device and a method of controlling an operation thereof according to the embodiment of the present disclosure will be described with reference to the accompanying drawings. A configuration of the user device and a method of controlling an operation thereof according to an embodiment of the present disclosure are not limited to the following contents, but are applicable to various embodiments based on following embodiments.

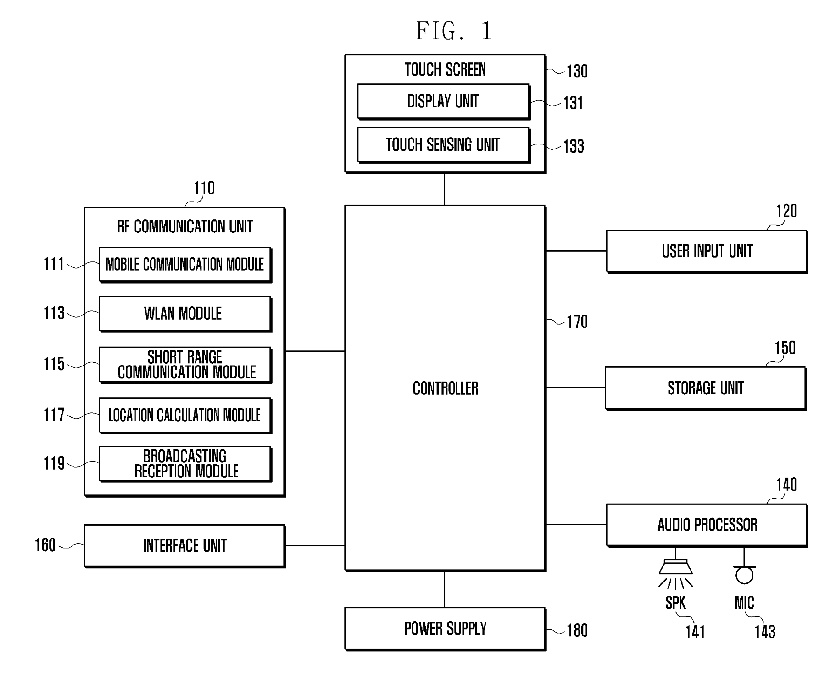

FIG. 1 is a block diagram schematically illustrating a configuration of a user device according to an embodiment of the present disclosure.

Referring to FIG. 1, the user device of the present disclosure includes a Radio Frequency (RF) communication unit 110, a user input unit 120, a touch screen 130, an audio processor 140, a storage unit 150, an interface unit 160, a controller 170, and a power supply 180. Constituent elements shown in FIG. 1 are not essential in the user device, but the user device may have more or fewer constituent elements of the present disclosure. For example, when the user device according to the embodiment of the present disclosure supports a photographing function, a camera module may be further included. When the user device according to the embodiment of the present disclosure does not support a broadcasting reception function, a part of the configuration (e.g. broadcasting reception module) may be omitted.

The RF communication unit 110 may include one or more modules to perform wireless communication between the user device and a wireless communication system or between the user device and another user device. For example, the RF communication unit 110 may include a mobile communication module 111, a Wireless Local Area Network (WLAN) module 113, a short range communication module 115, a location calculation module 117, and a broadcasting reception module 119.

The mobile communication module 111 transmits and receives a wireless signal to and from at least one of a base station, an external terminal, and various servers (e.g. an integration server, a provider server, a content server, and the like) on a mobile communication network. The wireless signal may include a voice call signal, a video call signal, and various types of data according to transmission/reception of characters/multi-media message. The WLAN module 113 may be a module for access to wireless Internet, and forming a wireless LAN link with another user device, and may be installed at the inside or outside of the user device. Wireless Internet techniques may include Wireless Fidelity (WI-FI), Wireless Broadband (WIBRO), World Interoperability for Microwave Access (WIMAX), and High Speed Downlink Packet Access (HSDPA). The WLAN module 113 may transmit or receive various data according to user selection to or from another user device when a WLAN link is formed with another user device.

The short range communication module 115 is a module for short range communication. The short range communication techniques may include Bluetooth, Bluetooth Low Energy (BLE), Radio Frequency Identification (RFID), Infrared Data Association (IrDA), Ultra Wideband (UWB), ZigBee and Near Field Communication (NFC). When short range communication connection with another user device is achieved, the short range communication module 115 may transmit and receive data according to user selection to and from another user device. The short range communication module 115 may always maintain a turned-on state or may be turned-on according to user setting or input.

The location calculation module 117 is a module for acquiring a location of the user device, and a representative example of the location calculation module is a Global Position System (GPS) module. The location calculation module 117 calculates distance information from three or more base stations and exact time information, and applies a triangulation to the calculated information so that three-dimensional current location information according to latitude, longitude, and altitude may be calculated. The location calculation module 117 may continuously receive current location information of the user device from three or more satellites to calculate location information. The location information of the user device may be acquired by various methods.

The broadcasting reception module 119 receives a broadcasting signal (e.g. TV broadcasting signal, radio broadcasting signal, data broadcasting signal) and/or information related to the broadcasting (e.g. information related to a broadcasting channel, a broadcasting program, or a broadcasting service provider) from an external broadcasting management server through a broadcasting channel (e.g. satellite broadcasting channel, terrestrial broadcasting channel).

The user input unit 120 generates input data for controlling an operation of the user device. The user input unit 120 may be configured with a key pad, a dome switch, a touch pad (resistive/capacitive type), a j og wheel, and a j og switch. The user input unit 120 may be implemented outside the user device in the form of one or more buttons or may be implemented as a touch panel. The user input unit 120 may generate corresponding input data when receiving a user input to activate a short-cut number function (particularly, a function to display contact party information on number buttons). Further, the user input unit 120 may receive a user input to change the preset quantity of short-cut numbers in which contact party information corresponding to the short-cut numbers are displayed and may generate corresponding input data.

The touch screen 130 is an input/output means to simultaneously perform an input function and a display function, and includes a display unit 131 and a touch sensing unit 133. In the present disclosure, if a touch event of a user is input by the touch sensing unit 133 while displaying a screen (e.g. a screen for transmitting a call, a message writing screen, a messenger screen, and the like) according to an operation of the short-cut number input mode through the display unit 131, the touch screen 130 transfers an input signal according to the touch event to the controller 170. Accordingly, the controller 170 may identify a type of the touch event described later, and, according to the type of the touch event, may control the display of contact information corresponding to a short-cut number on a reception information input window, the automatic dialing according to contact information of the short-cut number, and the display of the contact party information change on the number button of the touch key pad.

The display unit 131 displays information processed by the user device. For example, when the user device is in a call mode, the display unit 131 displays User Interface (UI) or Graphical UI (GUI) associated with a call. When the user device is in an image call mode or a photographing mode, the display unit 131 displays photographed and/or received image or may display UI, GUI. Further, when the user device is in an image call mode or a photographing mode, the display unit 131 displays a photographed and/or received image or may display UI, and GUI. In particular, the display unit 131 may display a dedicated touch key pad and a reception information input window to select/input the short-cut number in a short-cut number input mode. In addition, the display unit 131 may display contact party information mapped to the short-cut number on each number button of the touch keypad. Further, the display unit 131 may support a screen display in a landscape mode, a screen display in a portrait mode, and a screen conversion display according to a change between the landscape mode and the portrait mode according to a rotation direction (or orientation) of the user device. An example of a screen of the display unit 131 according to the present disclosure will be described later.

The display unit 131 may include at least one of a Liquid Crystal Display (LCD), a Thin Film Transistor-Liquid Crystal Display (TFT LCD), Light-Emitting Diode (LED), an Organic Light-Emitting Diode (OLED), an Active Matrix OLED (AMOLED), a flexible display, a bent display, and a 3D display. Some of the above displays may be configured with a transparent display of a transparent type or a light transmittance type.

The touch sensing unit 133 may be placed on the display unit 131. The touch sensing unit 133 may detect a touch event input (e.g. long press input, short press input, and the like) of the user contacted with a surface of the touch screen 130. When a touch event of the user is detected on a surface of the touch screen 130, the touch sensing unit 133 detects a coordinate at which the touch event is generated, and transmits the detected coordinate to the controller 170. The touch sensing unit 133 detects a touch event input generated by the user, and generates and transmits a signal according to the detected touch event to the controller 170. Accordingly, the controller 170 may perform a function corresponding to a region in which the touch event is generated according to the signal transmitted from the touch sensing unit 133. Particularly, the touch sensing unit 133 may receive a touch event of the user for selecting a short-cut number on a dedicated touch key pad provided through an execution screen of the short-cut number input mode of the user device. The touch sensing unit 133 converts pressure applied to a specific part of the display unit 130 or variation in capacitance generated at the specific part of the display unit 130 into an electric input signal. The touch sensing unit 133 may detect touched location and area, and pressure upon touch. When there is touch input for the touch sensing unit 133, corresponding signals are sent to a touch controller (not shown). The touch controller (not shown) processes the signals and transmits the processed signals to the controller 170. Accordingly, the controller 170 can recognize the region of the display unit 130 that is touched.

The audio processor 140 transmits an audio signal from the controller 170 to a speaker (SPK) 141, and transfers an input audio signal such as a voice from the microphone (MIC) 143 to the controller 170. The audio processor 140 converts voice/sound data for output into an audible sound and outputs the audible sound through the speaker 141 under the control of the controller 170, and converts an input audio signal such as a voice from the microphone (MIC) 143 into a digital signal, and transfers the digital signal to the controller 170.

The speaker 141 may output the audio data received from the RF communication unit 110 or stored in the storage unit 150 in a call mode, a message mode, a messenger mode, a recording mode, a voice recognition mode, a broadcasting reception mode, and a media contents (e.g. music files, moving image files) playback mode. The speaker 141 may output a sound signal associated with a function (e.g. a short-cut number function, call connection reception, call connection transmission, photographing, media contents file playback, and the like) performed in the user device.

The microphone 143 receives an external sound signal and processes the sound signal to electric voice data in a call mode, a message mode, a messenger mode, a recording mode, a voice recognition mode, and a photographing mode, and the like. The processed voice data is converted into a transmissible format to output to a mobile communication base station through a mobile communication module 111 in the call mode. Various noise removal algorithms for removing a noise generated during a procedure of receiving an external sound signal may be implemented in the microphone 143.

The storage unit 150 may store a program for processing and control of the controller 170, and may temporarily store input/output data (e.g. contact information, messages, chatting data, audios, moving images, images). The storage unit 150 may also store a use frequency (e.g. call use frequency corresponding to contact information, application use frequency, media contents use frequency, and the like), degree of importance, and priority according to an operation of functions of the user device. The storage unit 150 may store data related to vibration and sound of various patterns which are output upon touch input on the touch screen 130. The storage unit 150 may continuously or temporarily store programs and data associated with an operating system of the user device, and input and display control operations using the touch screen 130, and programs and data associated with an operation of a short-cut number function using a dedicated touch key pad of the user device. Particularly, the storage unit 150 may store contact party information set corresponding to short-cut numbers. The contact party information may be stored after being mapped to contact information. In the present disclosure, the contact party information set corresponding to short-cut numbers may be changed and set according to a use frequency of contact information which the user uses for a call. Further, in the present disclosure, number buttons of 0 to 9 may be used as the short-cut number, contact party information may be mapped to each short-cut number, and the contact party information mapped to each short-cut number may include a contact party's name, a nickname, a contact party's image, and a phone number.

The storage unit 150 may include a storage medium having at least one type of flash memory type memory, hard disk type memory, micro type memory, card type memory (e.g. Secure Digital Card (SD) or eXtream Digital Card (XD) memory), Random Access Memory (RAM), Static Random Access Memory (SRAM), Read-Only Memory (ROM), Electrically Erasable Programmable Read-Only Memory (EEPROM), Programmable Read-Only Memory (PROM), Magnetic RAM (MRAM), a magnetic disc, or an optical disc. The user device may operate in association with a web storage executing a storage function of the storage unit 150 on Internet.

The interface unit 160 serves as an interface to all external devices connected to the user device. The interface unit 160 may receive data or power from an external device, transfer the data or power to each element of the inside of the user device, or transmit data from the inside of the user device to an external device. For example, the interface unit 360 may include a wired/wireless headset port, an external charger port, a wired/wireless data port, a memory card port, a port for connecting a device having an identification module, an audio Input/Output (I/O) port, a video input/output (I/O) port and an earphone port.

The controller 170 controls an overall operation of the user device. For example, the controller 170 may perform control and processing associated with a voice call, data communication, and an image call. The controller 170 may include a multi-media module (not shown) for processing an operation associated with the short-cut number function. In the present disclosure, the multi-media module (not shown) may be implemented inside of, or separately from, the controller 170.

The controller 170 may control display of contact party information mapped to each button of a dedicated touch key pad and an operation of a short-cut number using the dedicated touch key pad in a short-cut number input mode provided according to the embodiment of the present disclosure.

Particularly, the controller 170 may collect contact information frequently used by the user, and manage a call frequency according to the collected contact information. The controller 170 may perform filtering according to a call frequency of contact information, and may determine a priority from a filtered result. The controller 170 may sequentially set a short-cut number according to the determined priority. For example, short-cut numbers of 1 to 0 may be sequentially set in such a manner that contact information having the highest priority is set to 1, and contact information having a second highest priority is set to 2. Further, when a short-cut number according to a call frequency of the contact information is set, the controller 170 extracts contact party information corresponding to contact information of each short-cut number. When the contact party information exists, the controller 170 may automatically set the contact party information in a corresponding short-cut number. When the contact party information does not exist, the controller 170 may automatically set the contact information in the corresponding short-cut number.

When the user device enters the short-cut number input mode, the controller 170 may control display of contact party information set to a corresponding short-cut number on each number button on a touch key pad based on contact information according to the call frequency. That is, when entering the short-cut number input mode, the controller 170 determines contact party information corresponding to short-cut numbers, and controls to display mapped contact party information on each button of the touch key pad. In this case, when displaying the contact party information on each number button, the controller 170 may determine the preset quantity of number buttons and display contact party information with respect to only the determined quantity of buttons. In an embodiment of the present disclosure, the preset quantity of the short-cut numbers for displaying the contact party information may be defined by the user, represents a generable number corresponding to number buttons of 1 to 0 of the touch key pad, and may be defined as one or more.

If the touch event of the user is detected in a state in which the contact party information is provided through the touch key pad as described above, the controller 170 may identify a type of the touch event. In this case, if the touch event corresponds to a long press, which is an input of being pressed for a certain time or longer, the controller 170 determines the touch event as execution of the function according to a short-cut number, and controls execution of a corresponding function according to a communication mode being currently executed. For example, when the communication mode is a call mode, the controller 170 may input and indicate contact party information (or contact information) of the short-cut number corresponding to a long press input or control automatic transmission based on contact information of the short-cut number. In addition, when the communication mode is the message mode or the messenger mode, the controller 170 may input and indicate contact party information (or contact information) of the short-cut number corresponding to a long press input on a reception information input window.

Further, if the touch event is a short press input which is pressed on a number button of a touch key pad within a certain time, the controller 170 may input and indicate a number of a corresponding button to which the short press is input on the reception information input window.

In addition, if the touch event is input on a set button of the touch key pad, the controller 170 controls display of a pop-up window capable of selecting the set quantity that displays contact party information corresponding to short-cut number. If a specific set quantity is selected through the pop-up window, the controller 170 changes and provides contact party information displayed on the touch key pad corresponding to the selected set quantity. For example, it is assumed that contact party information about five contact parties are currently set to short cut numbers 1 to 5 and are displayed through buttons 1 to 5 of the touch key pad, and contact party information about nine contact parties are selected through the pop-up window. Then, the controller 170 controls display of contact party information of nine contact parties in response to user selection through the pop-up window. That is, the controller 170 may update the contact party information of the touch key pad according to the set quantity of short-cut numbers according to the user selection.

In this case, when the set quantity is increased more than a currently set quantity, the controller 170 may extract an increased amount of contact information (e.g. additional contact information of four contact parties) with reference to a call frequency corresponding to contact information previously collected through filtering, and may additionally set contact party information corresponding to the extracted contact information to each short-cut number. Further, when the set quantity is decreased to less than the currently set quantity, the controller 170 may firstly remove contact information having low priority from the currently displayed contact party information corresponding to short-cut numbers. That is, the controller 170 may check short-cut numbers having a low priority for a quantity of short-cut numbers exceeding the changed set quantity from currently displayed contact party information corresponding to short-cut numbers, and remove contact party information of the checked short-cut number from a corresponding number button. In this case, display removal of previous contact party information and display of new contact party information may be achieved by using fade-in and fade-out effects. A detailed control operation of the controller 170 will be described later in an example of an operation of the user device and a control method thereof referring to following drawings.

In addition, the controller 170 may control various operations associated with a general function of the user device as well as the foregoing functions. For example, when executing a specific application, the controller 170 may control an operation and screen display of the application. Further, the controller 170 may receive an input signal corresponding to various touch event inputs supported in a touch based-input interface, and control a corresponding operation of functions. Further, the controller 170 may control transmission/reception of various data based on wired communication or wireless communication.

The power supply 180 uses power which is applied from an external power source or an internal power source, and supplies power necessary to operate each constituent element under control of the controller 170.

As described above, the user device according to the embodiment of the present disclosure may include various devices such as various information communication devices, multi-media devices, and application devices thereof that support the functions of the embodiments of the present disclosure, that is, all devices using an Application Processor (AP), a Graphic Processing Unit (GPU), and a Central Processing Unit (CPU). For example, the user device includes devices such as tablet Personal Computer (PC), Smart Phone, Portable Multimedia Player (PMP), media player (e.g. MP 3 player), portable game terminal, and Personal Digital Assistant (PDA) as well as mobile communication terminals operating based on respective communication protocols corresponding to various communication systems.

Meanwhile, various embodiments according to the present disclosure may be implemented in a recording medium which may be read by a computer or a similar device using software, hardware or a combination thereof. According to hardware implementation, various embodiments of the present disclosure may be implemented using at least one of Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, micro-controllers, microprocessors, and an electric unit for executing other functions. In some cases, embodiments of the present specification may be implemented just by the controller 170. According to the software implementation, embodiments of procedures and functions according to the specification may be implemented by separate software modules. Respective software modules may perform at least one function and operation described in the specification.

The recording medium may include a computer readable recording medium recording a program which checks a call frequency corresponding to contact information upon execution of a short-cut number input mode, automatically sets short-cut numbers according to a call frequency corresponding to contact information, extracts contact party information corresponding to the set short-cut numbers, and processes to display the contact party information corresponding to short-cut numbers through a button of a touch key pad.

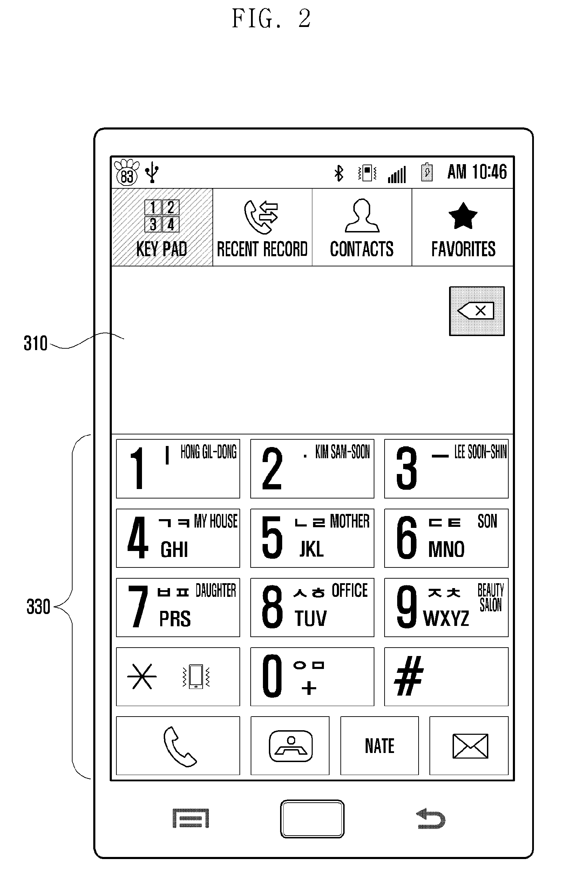

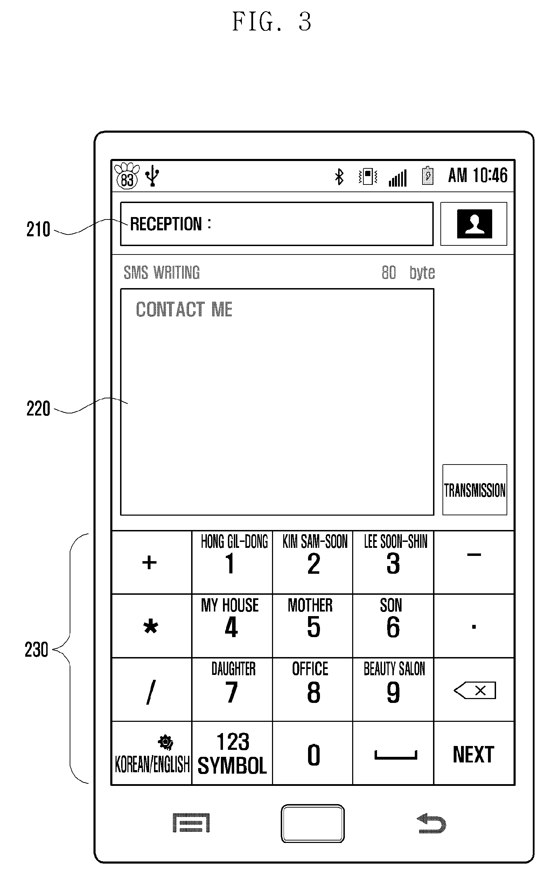

FIGS. 2 and 3 are diagrams illustrating examples of a screen interface supported to operate a short-cut number function in a user device according to an embodiment of the present disclosure.

Referring to FIGS. 2 and 3, FIG. 2 illustrates an example of a screen when a call mode is executed in a short-cut number input mode (or communication mode) of an embodiment of the present disclosure, and FIG. 3 illustrates an example of a screen when a message mode is executed in the short-cut number input mode (or communication mode) of an embodiment of the present disclosure. The call mode of FIG. 2 may be configured to include a reception information input window 310 and a touch key pad 330, and the message mode of FIG. 3 may be configured to include a reception information input window 210, a message input window 220, and a touch key pad 230. A configuration of a screen interface of each of such modes may be variously implemented according to a type of a user device.

As illustrated in FIGS. 2 and 3, according to an embodiment of the present disclosure, the user device may automatically set contact information which is frequently used by the user according to a use frequency as a short-cut number without memorizing a short-cut number, this being a function available in a communication mode, and display corresponding contact party information through touch key pads 230 and 330. That is, the touch key pads 230 and 330 may display contact party information (e.g. a contact party's name, a nickname, an image, a phone number, and the like) on each number button set as a short-cut number.

For example, it is assumed that the user sets a set quantity of short-cut numbers to display the contact party information as 9, and contact information having the highest priority is mapped to a short-cut number 1. Contact party information may be displayed or contact information may be displayed on each short-cut number according to presence of contact party information mapped to each contact information. As an example, as illustrated in FIGS. 2 and 3, "HONG gil-dong" in number 1, "KIM sam-soon" in number 2, "LEE soon-shin" in number 3, "my house" in number 4 , "mother" in number 5, "son" in number 6, "daughter" in number 7, "office" in number 8, "beauty salon" in number 9 may be set and displayed on the touch key pads 230 and 330 according to a use frequency. That is, the touch key pads 230 and 330 may display contact party information matched to buttons of number 1 to number 9 on the corresponding number buttons. In this case, the contact party information according to an embodiment of the present disclosure may be provided with a name, a nickname, an image, or a phone number according to a form of the contact party information registered by the user in a phone book.

Further, the contact party information matched to each short-cut number may be automatically changed and set according to a frequency at which the user uses the contact information. That is, contact party information on each number button of touch key pads 230 and 330 corresponding to each short-cut number may be variably provided. For example, when the user uses contact information of an office most frequently, the contact information of the office may be set to 1, that being the highest short-cut number. Accordingly, contact party information "office" mapped to contact information of the office may be displayed on a number button 1 of the touch key pad 230 and 330. Similarly, according to the embodiment of the present disclosure, when entering a short-cut number input mode (or communication mode), contact party information of a short-cut number matched with a corresponding number may be displayed on a number button of the touch key pad 230 and 330.

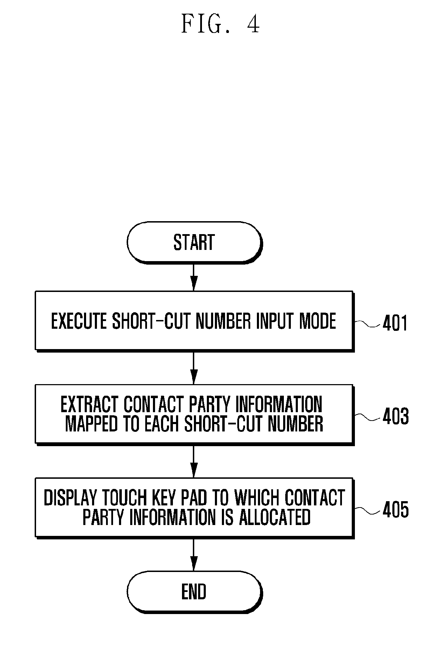

FIG. 4 is a flowchart illustrating a method for providing a short-cut number in a user device according to an embodiment of the present disclosure.

Referring to FIG. 4, the controller 170 may execute a short-cut number input mode in response to a user request at operation 401. For example, the controller 170 may control execution of a short-cut number input mode capable of inputting a short-cut number in a communication mode such as the call mode, message mode, and messenger mode. That is, various embodiments of the present disclosure may include various modes capable of supporting an operation of functions based on the short-cut number.

Upon execution of the short-cut number input mode, the controller 170 may extract contact party information mapped to each short-cut number at operation 403. For example, the controller 170 may collect filtered contact information according to a call frequency, and map contact information corresponding to the set quantity of short-cut numbers according to user setting among the collected contact information to each short-cut number to manage the mapped result. At this time, the controller 170 may map the contact information to the short-cut number by using contact party information (e.g. a contact party's name, a nickname, an image, phone number and the like) of each contact information registered in the phone book. When there is no contact party information, the controller 170 may map and manage the contact information. Further, upon mapping the contact information, the controller 170 may map the contact information to short-cut numbers between number 1 of the short-cut numbers and a short-cut number of the set quantity of the set short-cut numbers according to a priority.

The controller 170 may control display of a touch key pad to which the contact party information is allocated at operation 405. In this case, the controller 170 may control display of a touch key pad to which the contact party information is mapped on each button corresponding to each short-cut number in accordance with an execution form of the short-cut number input mode. For example, the controller 170 may control display of a screen of an example as illustrated in FIGS. 2 and 3 according to the execution form of the short-cut number input mode.

As described above, according to the embodiment of the present disclosure, the controller 170 may control execution of the short-cut number input mode in response to the user request, and check a call frequency corresponding to contact information upon execution of the short-cut number input mode. In addition, the controller 170 may automatically set the short-cut number according to a call frequency corresponding to the contact information. Next, the controller 170 may extract the contact party information corresponding to the set short-cut numbers from a phone book of the storage unit 150, and map the extracted contact party information to the set short-cut number. In addition, the controller 170 may control to display the contact party information corresponding to short-cut numbers through each button corresponding to the short-cut number on a touch key pad.

When setting the short-cut number, the controller 170 may collect contact information used by the user, check a use frequency of the collected contact information, and determine a priority according to the use frequency of the contact information. Further, the controller 170 may automatically set the short-cut number by using contact information according to the determined priority. In this case, the controller 170 may set the short-cut numbers according to the priority up to the set quantity of short-cut numbers previously set by the user. The controller 170 may extract the preset contact party information with respect to contact information according to the priority. Further, if there is contact party information corresponding to contact information, the controller 170 may control display of the contact party information through a button corresponding to the short-cut number. When there is no contact party information corresponding to the contact information, the controller 170 may control display of the contact information through a button corresponding to the short-cut number.

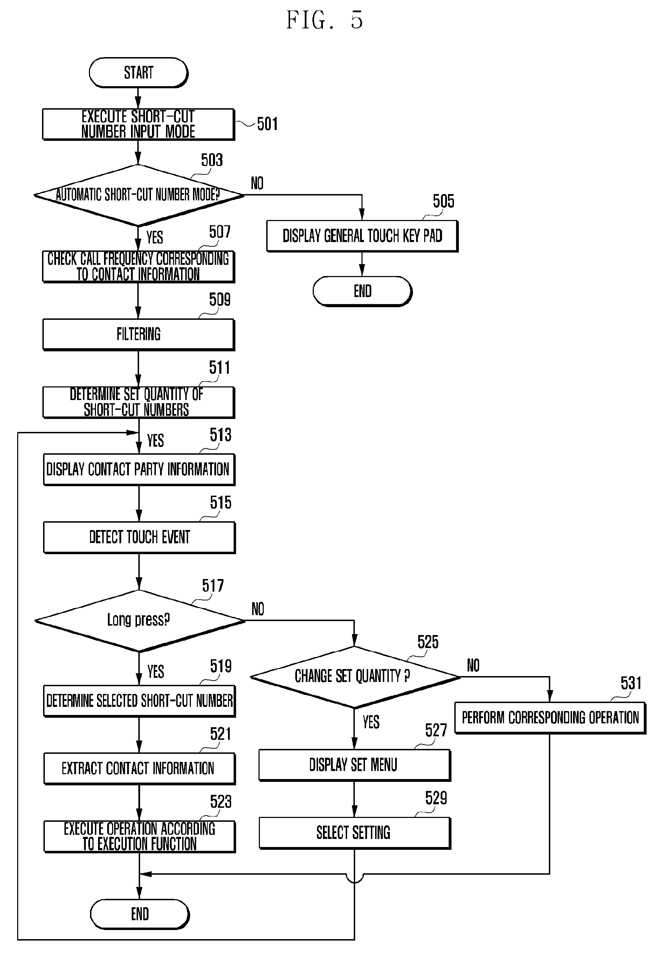

FIG. 5 is a flowchart illustrating a method for operating a short-cut number function in a user device according to an embodiment of the present disclosure.

Referring to FIG. 5, the controller 170 may control execution of a short-cut number input mode in response to a user request at operation 501. As described above, the short-cut number input mode according to an embodiment of the present disclosure may represent various types of modes capable of supporting an operation of a short-cut number based function.

Upon execution of the short-cut number input mode 501, the controller 170 determines whether an automatic short-cut number mode is set at operation 503. That is, if execution of the short-cut number input mode 501 is requested, the controller 170 may determine whether a set state of the automatic short-cut number mode in which contact party information corresponding to short-cut numbers is displayed on a touch key pad is activated or deactivated.

If the automatic short-cut number mode is not set (NO of operation 503), the controller 170 controls display of a general touch key pad at operation 505. For example, the controller 170 may control to display a general touch key pad in which contact party information corresponding to short-cut number is not displayed on a button of the touch key pad.

If the automatic short-cut number mode is set (YES of operation 503), the controller 170 checks a call frequency corresponding to contact information at operation 507, and controls a filtering process according to the call frequency at operation 509. For example, the controller 170 may extract contact information used in the user device, and check a use frequency of each contact information that has been used for a call. Further, the controller 170 performs a filtering process by applying a priority according to a call frequency corresponding to contact information.

The controller 170 determines a set quantity of short-cut numbers after filtering the contact information at operation 511. That is, the controller 170 may determine the set quantity of the contact party, mapped to the short-cut number, to be displayed through a touch key pad among the filtered contact information. The set quantity of short-cut numbers displayed corresponding to short-cut numbers of the touch key pad is set to 10, from short-cut number 1 to short-cut number 10 corresponding to number buttons 1 to 0 respectively, according to a user definition.

The controller 170 controls display of contact party information corresponding to short-cut numbers corresponding to the set quantity of short-cut numbers at operation 513. For example, the controller 170 may confirm contact information mapped to each short-cut number corresponding to the set quantity of short-cut numbers, and extract contact party information previously set to each contact information. Further, the controller 170 may map the extracted contact party information to each short-cut number according to the set quantity of short-cut numbers, and control to display the contact party information through each button corresponding to the short-cut number. In this case, when there is no preset contact party information with respect to contact information of a specific short-cut number, the controller 170 may control to display contact information through the corresponding button. That is, the controller 170 may configure a touch key pad where contact party information corresponding to short-cut number corresponding to the preset quantity of short-cut numbers is mapped to each number button. An example of the screen is illustrated in FIGS. 2 and 3.

The controller 170 may detect a touch event input in a state in which the contact party information is displayed through a button of the touch key pad at operation 515. That is, the controller 170 may detect the touch event input on the touch key pad in a state in which a touch key pad, in which contact party information corresponding to short-cut numbers is allocated to each button is displayed.

When the touch event is detected through the touch key pad, the controller 170 determines a type of the touch event, in particular, whether the touch event is a touch event based on a 'long press' which is input for a preset time or longer at operation 517. In an embodiment of the present disclosure, the touch event based on a 'long press' may correspond to an input method to select any one specific button among buttons which currently display contact party information corresponding to short-cut numbers on the touch key pad.

If the type of the input touch event is the 'long press' (YES of operation 517), the controller 170 may determine a short-cut number of the selected button at operation 519. That is, the controller 170 may determine a short-cut number matched with the button selected by the touch event.

The controller 170 extracts contact information mapped to the short-cut number determined at operation 521, and controls execution of a corresponding operation according to an execution function based on the extracted contact information at operation 523. For example, when a function executed in the short-cut number input mode is a call mode, the controller 170 may input and display the extracted contact information on a reception information input window or may control automatic call transmission based on the extracted contact information. When the function executed in the short-cut number input mode is a message mode or a messenger mode, the controller 170 may input and display the extracted contact information on the reception information input window.

If the type of the input touch event is not the 'long press' (NO of operation 517), the controller 170 may determine whether the type of the touch event corresponds to a touch event to change the set quantity of the short-cut numbers (hereinafter, referred to as 'change event') at operation 525. In an embodiment of the present disclosure, the change event is an event for changing the number of the contact party information corresponding to short-cut numbers currently displayed on a touch key pad, which may be input through a set change button previously provided in the user device.

For example, the set change button may be provided by a specific button among buttons on the touch key pad as a set change button, or a specific button of the user input unit 120 of the user device may be provided as a set change button. In the embodiment of the present disclosure, a specific button of the touch key pad may be used as a set change button. Accordingly, the change event may be input on a set change button of the touch key pad, and may be input with a short press based touch event (e.g. a tap).

If the type of the input touch event is a change event input to the set change button (YES of operation 525), the controller 170 controls a set menu capable of changing the set quantity of short-cut numbers through a pop-up window at operation 527. If the set quantity of short-cut numbers is selected by the user through the set menu at operation 529, the controller 170 changes display of contact party information according to the set quantity of selected short-cut numbers, and controls a corresponding display of contact party information corresponding to short-cut numbers at operation 513. That is, the controller 170 may control to display contact party information through each button corresponding to each short-cut number according to the changed set quantity of short-cut numbers. An example of an operation of changing the set quantity of short-cut numbers according to an embodiment of the present disclosure will be described later.

If the type of the input touch event is not the change event (NO of operation 525), the controller 170 may control the execution of a corresponding operation at operation 531. For example, if the input touch event is a 'short press' based touch event which is input for a time shorter than a preset time, the controller 170 may input and display a character (particularly, a number) in the reception information input window. In an embodiment of the present disclosure, the 'short press' based touch event may correspond to an input scheme for inputting a number of a specific button on a touch key pad in the reception information input window regardless of contact party information corresponding to short-cut numbers currently displayed on a key pad. This may correspond to an operation of selecting a number button of a touch key pad for the user to directly input contact information (e.g. phone number) on the reception information input window.

Meanwhile, the collected contact information of an embodiment of the present disclosure may be contact information for transmitting a call from the user device by the user. That is, in an embodiment of the present disclosure, the controller 170 may collect contact information by which the user transmitted a call (transmission contact information) and may determine a call frequency based on the collected contact information. This may prevent a short-cut number malfunction caused by contact information corresponding to an unnecessary spam received from outside. Further, according to an embodiment of the embodiment of the present disclosure, the contact information may be processed based on all contact information according to transmission and reception or may be processed based on the contact information according to reception only. This may be variously operated according to user setting. When a call frequency corresponding to contact information is determined in a case where only the contact information according to the reception is included, various spam removal algorithms to remove spam contact information may be implemented.

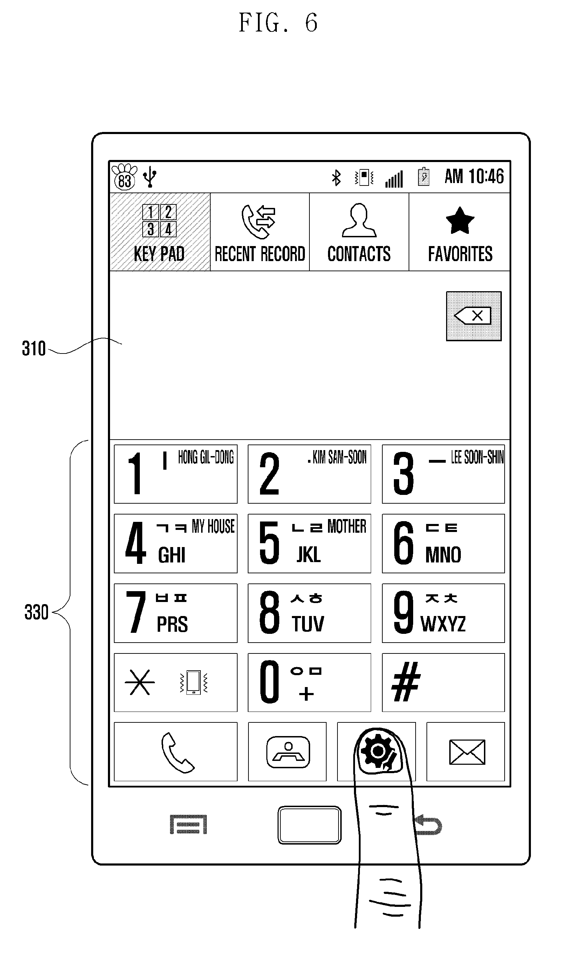

FIGS. 6 to 8 are diagrams illustrating examples of an operation screen to operate the short-cut number function in a user device according to an embodiment of the present disclosure.

Referring to FIGS. 6 to 8, as illustrated in an example of a screen of FIG. 6, it is assumed that the reception information input window 310 is blank, and a contact party information of a corresponding short-cut number is displayed in number buttons 1 to 5 of the touch key pad 330 according to the set quantity (e.g. 5) of preset short-cut numbers. For example, it is assumed that the set quantity of preset short-cut numbers is 5, and contact information corresponding to "HONG gil-dong", "KIM sam-soon", "LEE soon-shin ", "my house", and "mother", are filtered respectively in short-cut numbers 1, 2, 3, 4, and 5 according to call frequency corresponding to the collected contact information. Accordingly, as shown in FIG. 6, contact party information corresponding to contact information of each short-cut number such as "HONG gil-dong", "KIM sam-soon", "LEE soon-shin ", "my house", and "mother", may be set to numbers 1, 2, 3, 4, and 5 of the touch key pad 330.

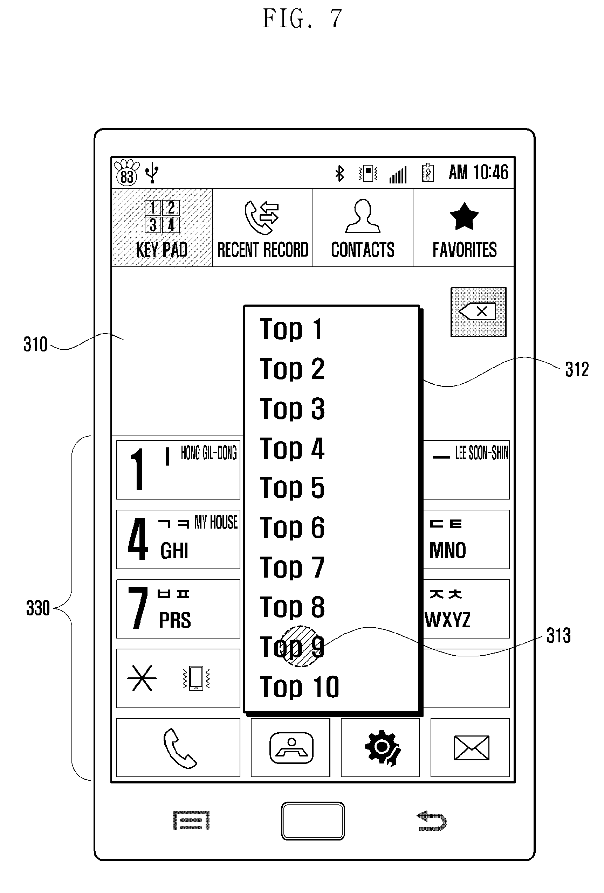

The user may input a touch event (e.g. change event) selecting a set change button previously provided in the touch key pad 330 in order to change the set quantity of short-cut numbers displayed in a state of FIG. 6. If the user inputs a touch event on a set change button in order to change the set quantity of short-cut numbers, the user device displays a screen as illustrated in FIG. 7. That is, the screen of the user device illustrated in FIG. 6 is changed as illustrated in FIG. 7 according to an input of the touch event.

As shown in FIG. 7, the user device displays a set menu capable of changing the set quantity of short-cut numbers through a pop-up window. In the set menu of an embodiment of the present disclosure, it is assumed that the quantity of short-cut numbers automatically set according to a call frequency corresponding to contact information is operated with total 10 corresponding to a short-cut number 1 to a short-cut number 0. Accordingly, the set menu 312 may be provided from an option displaying only one short-cut number having the highest priority (e.g. top 1) to an option displaying 10 short-cut numbers according to the priority(e.g. top 10). Accordingly, in an embodiment of the present disclosure, the set menu 312 may be variously implemented according to the quantity of short-cut numbers.

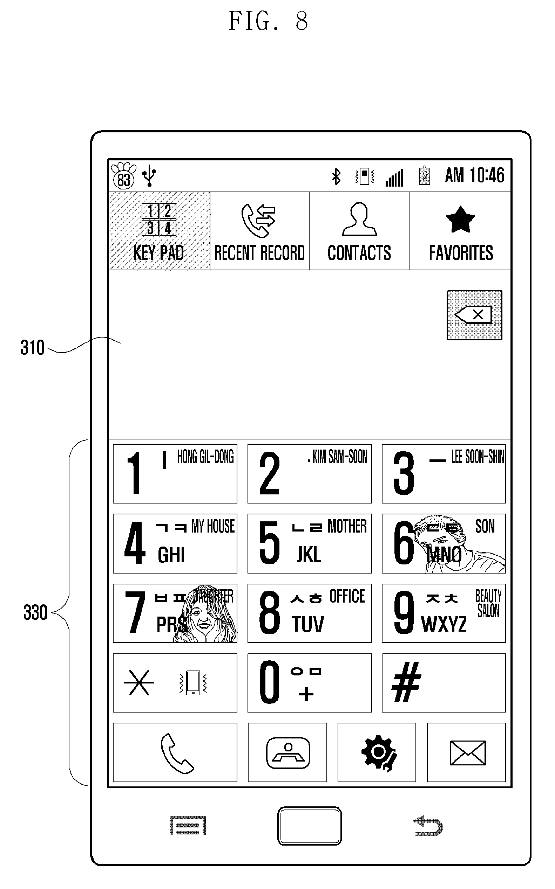

The user may input a touch event (e.g. selection event) selecting one from options (e.g. top 1 to top 10) previously provided in the set menu 312 in order to change the set quantity of short-cut numbers displayed in a state of FIG. 7. If the user inputs a touch event selecting a specific option (e.g. top 9) 313 from a set menu 312 in order to change the set quantity of short-cut numbers, the user device displays a screen as illustrated in FIG. 8. That is, the screen of the user device illustrated in FIG. 7 is changed to that illustrated in FIG. 8 according to the touch event.

As shown in FIG. 8, the contact party information of a corresponding short-cut number may be displayed on number buttons 1 to 9 of the touch key pad 330 according to the set quantity (e.g. 9) of short-cut numbers which is changed and set. For example, it is assumed that the set quantity of short-cut numbers which is changed and set is 9, thereby contact information corresponding to "HONG gil-dong", "KIM sam-soon", "LEE soon-shin ", "my house", "mother", "son", "daughter", "office", and "beauty salon" are filtered respectively in short-cut numbers 1, 2, 3, 4, 5, 6, 7, 8, and 9 according to call frequency corresponding to contact information. Accordingly, as shown in FIG. 8, contact party information corresponding to contact information of each short-cut number may be displayed in such a manner that "HONG gil-dong" is displayed in number 1 of the touch key pad 330, "KIM sam-soon" in number 2, "LEE soon-shin" in number 3, "my house" in number 4, "mother" in number 5, "son" in number 6, "daughter" in number 7, "office" in number 8, and "beauty salon" in number 9.

Particularly, FIG. 8 illustrates an example of a case where contact party information for contact information corresponding to "son" and "daughter" is set together with nickname and image. Nickname and image may be displayed together in a button 6 and a button 7 of the touch key pad 330. Similarly, according to the embodiment of the present disclosure, at least one contact party information may be previously mapped to contact information according to user setting. Upon displaying contact party information by short-cut numbers, at least one of the contact party's name, the nickname, or the image may be displayed according to contact party information mapped to a corresponding short-cut number.

Further, although not shown in FIGS. 6 to 8, when the contact party information is previously not set to contact information, corresponding contact information (e.g. wired phone number, mobile communication phone number, and the like) instead of contact party information may be displayed through a corresponding button. For example, if contact party information "office" were not set to a short-cut number 8 in an example of FIG. 8, corresponding contact information (e.g. 031-123-4567) may be automatically mapped to a short-cut number 8, and accordingly "031-123-4567" may be displayed in the button 8.

In addition, FIGS. 6 to 8 illustrate an operation of changing the set quantity of short-cut numbers. However, the user may further perform an operation which initializes a call frequency corresponding to contact information through a menu operation. In this case, the user device initializes currently recoded contact information and a call frequency corresponding to contact information in response to a user operation, and may check a call frequency and operate a set function of short-cut numbers based on the contact information used afterwards.

As described above, according to the embodiment of the present disclosure, the user device checks a use frequency (e.g. a call frequency) corresponding to contact information used for a call upon entering a communication mode, and may filter contact information according to a use frequency, a set quantity of short-cut numbers, and a priority. In addition, the user device may extract contact party information corresponding to the filtered contact information to display contact party information (or contact information) extracted through a button corresponding to each short-cut number.

The foregoing various embodiments of the present disclosure may be implemented in a program command form executable by various computer means and be recorded in a computer readable recording medium. In this case, the computer readable recording medium may include a program command, a data file, and a data structure individually or a combination thereof. In the meantime, the program command recorded in a recording medium may be specially designed or configured for the various embodiments of the present disclosure or be known to a person having ordinary skill in a computer software field to be used. The computer readable recording medium includes Magnetic Media such as hard disk, floppy disk, or magnetic tape, Optical Media such as Compact Disc Read Only Memory (CD-ROM) or Digital Versatile Disc (DVD), Magneto-Optical Media such as floptical disk, and a hardware device such as ROM. RAM, or flash memory for storing and executing program commands. Further, the program command includes a machine language code created by a compiler and a high-level language code executable by a computer using an interpreter. The foregoing hardware device may be configured to be operated according to at least one software module to perform an operation of various embodiments of the present disclosure, or software modules may be configured to be operated according to the hardware device.

As mentioned above, according to the method and the apparatus for providing a short-cut number in the user device, contact party information of a short-cut number matched with a corresponding number may be displayed on a number button of a key pad in various short-cut input modes provided from the user device. According to an embodiment of the present disclosure, the user device may collect contact information which the user frequently uses, and manage a call frequency according to the collected contact information. Further, the user device may automatically set contact party information of a short-cut number based on a call frequency corresponding to contact information, and may display the set contact party information by short-cut numbers through a number button of a key pad.

According to an embodiment of the present disclosure, the short-cut number may be automatically generated and provided in consideration of a call frequency of the user when supporting a short-cut number function which is a useful function in a communication mode. Accordingly, the user may use the short-cut number function without performing a complex procedure to set the short-cut numbers. Further, according to an embodiment of the present disclosure, since contact party information of an automatically set short-cut number is displayed through each number button according to a call frequency corresponding to contact party information, the user can easily and intuitively use the short-cut number function without memorizing the contact party information for the short-cut number. That is, according to an embodiment of the present disclosure, it is not necessary to memorize many short-cut numbers upon using the short-cut number function, and an easy use for the short-cut number may be supported.

Therefore, in various embodiments of the present disclosure, the user device implements an optimal environment to support a short-cut-number function to enhance user convenience and to enhance utilization, convenience, and competitiveness of the user device. The various embodiments of the present disclosure may be simply implemented in various types of user devices and various corresponding devices.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method of providing a short-cut number in a user device, the method comprising:
executing a short-cut number input mode;
setting a short-cut number according to a call frequency corresponding to contact information when the short-cut number input mode is executed;
extracting contact party information corresponding to the set short-cut number; and
displaying the contact party information corresponding to the set short-cut number through a button of a touch key pad.

2. The method of claim 1, wherein the setting of the short-cut number comprises:
collecting the contact information used by a user;
checking a use frequency of the collected contact information;
determining a priority according to the use frequency of the contact information; and
setting the short-cut number by using the contact information according to the determined priority.

3. The method of claim 2, wherein the setting of the short-cut number comprises setting a preset quantity of short-cut numbers.

4. The method of claim 2, wherein the extracting of the contact party information comprises extracting preset contact party information with respect to the contact information according to the priority.

5. The method of claim 2, wherein the displaying of the contact party information comprises displaying the contact party information of the contact information according to the priority through a button corresponding to the short-cut number.

6. The method of claim 5, wherein the displaying of the contact party information comprises:
displaying the contact party information when the contact party information mapped to the contact information exists; and
displaying the contact information when the contact party information mapped to the contact information does not exist.

7. The method of claim 2, further comprising:
detecting a touch event input on the touch key pad in a state in which the contact party information corresponding to the short-cut number is displayed through a button of the touch key pad;
determining a type of the touch event; and
updating the contact party information of the touch key pad or controlling an input of selected contact party information according to the type of the touch event.

8. The method of claim 7, wherein the determining of the type of the touch event comprises determining a touch event based on a long press in which the touch event is input for a preset time or longer, a touch event to change a set quantity of short-cut numbers, and a touch event based on a short press input to a button of a touch key pad for a time shorter than a predetermined time.

9. The method of claim 8, further comprising:
determining a short-cut number allocated to a button selected according to the touch event, when the type of the touch event is a touch event based on a long press;
extracting the contact information mapped to the determined short-cut number; and
performing an operation according to an execution function based on the extracted contact information.

10. The method of claim 9, wherein the performing of the operation comprises performing one of an input of the extracted contact information on a reception information input window and an automatic call transmission based on the extracted contact information, according to a function executed in the short-cut number input mode.

11. The method of claim 8, further comprising:
displaying a set menu capable of changing the set quantity of short-cut numbers through a pop-up window when the type of the touch event is the touch event to change the set quantity of short-cut numbers; and
changing the contact party information of the touch key pad according to a selected set quantity of short-cut numbers when the set quantity of short-cut numbers is selected through the set menu.

12. The method of claim 8, wherein the touch event to change the set quantity of short-cut numbers is an input to change a currently displayed quantity of the contact party information corresponding to the short-cut numbers on a touch key pad, and is input through a set change button which is previously provided.

13. The method of claim 2, wherein the contact party information comprises at least one of a contact party's name, a nickname, or an image.

14. The method of claim 2, wherein the short-cut number input mode comprises various modes to support an operation of a function based on the short-cut number.

15. A user device comprising:
a display unit configured to display a reception information input window and a touch key pad in a short-cut number input mode, and configured to display contact party information of a short-cut number designated on each button of the touch key pad;
a touch sensing unit configured to receive a touch event based on the touch key pad in the short-cut number input mode; and
a controller configured to control to set the short-cut number according to a call frequency corresponding to contact information when the short-cut number input mode is executed, and configured to extract the contact party information corresponding to the set short-cut number to display through a button of the touch key pad.

16. The user device of claim 15, wherein the controller collects the contact information used by a user, checks a use frequency of the collected contact information to determine a priority according to the use frequency of the contact information, and sets the short-cut number by using the contact information according to the determined priority.

17. The user device of claim 16, wherein the controller extracts preset contact party information with respect to the contact information according to the priority, and sets the short-cut number as one of a set quantity of short-cut numbers by using the extracted contact party information.

18. The user device of claim 16, wherein the controller controls display by the contact party information when the contact party information mapped to the contact information exists, and controls display by the contact information when the contact party information mapped to the contact information does not exist.

19. The user device of claim 16, wherein the controller determines a short-cut number of a button selected by a touch event when the touch event is a long press which is input for a preset time or longer on the touch key pad, and extracts the contact information mapped to the short-cut number.

20. The user device of claim 19, wherein the controller inputs and displays the extracted contact information to a reception information input window or controls automatic call transmission based on the extracted contact information.

21. A non-transitory computer readable recording medium for recording a program of instructions configured to be readable by at least one processor for instructing the at least one processor to execute a computer process for performing the method as recited in claim 1.
